# EUROPÄISCHE PATENTSCHRIFT

(11) **EP 2 788 244 B1**
(45) Veröffentlichungstag und Bekanntmachung des Hinweises auf die Patenterteilung: **14.11.2018**
(21) Anmeldenummer: 12756663.6
(22) Anmeldetag: 07.09.2012
(51) Int. Cl.: B62D 6/00

(54) **FAHRSTABILISIERUNGSVERFAHREN, FAHRSTABILISIERUNGSEINRICHTUNG UND FAHRZEUG DAMIT**
DRIVE STABILISATION METHOD, DRIVE STABILISATION DEVICE AND RELATED VEHICLE
PROCÉDÉ DE STABILISATION DE CONDUITE, DISPOSITIF DE STABILISATION DE CONDUITE ET VÉHICULE ÉQUIPÉ DE CELUI-CI

(30) Priorität: 09.12.2011 DE 102011120667
(43) Veröffentlichungstag der Anmeldung: 15.10.2014
(73) Patentinhaber: WABCO GmbH, 30453 Hannover (DE)
(72) Erfinder: GERECKE, Marc, 30419 Hannover (DE); KOPPER, Heiko, 31515 Wunstorf (DE); MICHAELSEN, Arne, 30926 Seelze (DE)
(74) Vertreter: Lauerwald, Jörg
(86) Internationale Anmeldenummer: PCT/EP2012/003754
(87) Internationale Veröffentlichungsnummer: WO 2013/083208

(56) Entgegenhaltungen:
- EP-A1- 2 025 578
- WO-A1-2005/047086
- DE-A1- 4 419 131
- DE-A1- 10 208 418
- DE-A1- 10 360 404
- DE-A1- 19 918 597
- DE-A1-102007 038 575
- GB-A- 2 453 024
- US-A1- 2003 055 549
- US-B1- 7 164 980

## Beschreibung

Die Erfindung betrifft ein Fahrstabilisierungsverfahren nach dem Oberbegriff des Anspruchs 1, eine Fahrstabilisierungseinrichtung nach dem Oberbegriff des Anspruchs 7 und ein Fahrzeug mit der Fahrstabilisierungseinrichtung nach Anspruch 14.

Fahrzeuge können elektronisch gelenkte Achsen aufweisen, wobei entweder ein Lenkwinkel vollständig elektronisch eingestellt wird oder ein von einem Fahrer mittels eines Lenkrads eingestellter Lenkwinkel mit einem Zusatzlenkwinkel überlagert wird. Es ist bekannt, einen Lenkwinkel der gelenkten Achse durch elektronisches Lenken dieser Achse zu ändern, um dadurch das Fahrzeug zu stabilisieren.

Aus DE 10 2007 038 575 A1 ist ein Verfahren zum Einstellen eines Lenkwinkels einer elektronisch gelenkten Achse eines Nutzfahrzeugs bekannt, wobei bei Erkennen eines instabilen Fahrzustandes der Lenkwinkel der elektronisch gelenkten Achse geändert wird. Insbesondere ist die elektronisch gelenkte Achse eine Nachlaufachse, deren Lenkwinkel im Falle einer Untersteuerneigung vergrößert und im Falle einer Übersteuerneigung verkleinert wird. Zusätzlich können Bremseingriffe vorgesehen sein.

Aus WO 2005/047086 A1 sind ein Verfahren und eine Vorrichtung zum Regeln der Fahrdynamik eines Fahrzeuges bekannt, wobei Lenkeingriffe an der Vorderachse und/oder an der Hinterachse des Fahrzeugs vorgenommen werden, die einem Untersteuern oder Übersteuern entgegenwirken. Diese Lenkeingriffe können mit herkömmlichen Bremsen und Motoreingriffen eines ESP (elektronisches Stabilitätsprogramm)-Systems kombiniert werden.

Die DE19918597A1 offenbart ein Verfahren zur Reduktion der Kippgefahr von Kraftfahrzeugen und ermittelt hierzu ständig einen Kippkoeffizienten des Kraftfahrzeuges und vergleicht diesen mit einem vorgegebenen Grenzwert. Bei Überschreiten des Grenzwertes wird automatisch ein Lenkeingriff an der Vorderachse eingeleitet, der mit abnehmender Kippstabilität zunimmt und der mit zunehmender Kippstabilität reduziert oder zumindest konstant gehalten wird. Der Kippkoeffizient wird über eine Messung der Reifenaufstandskräfte ermittelt.

Der Erfindung liegt die Aufgabe zugrunde, derart bekannte Fahrzeugstabilisierungen unter Einsatz von Lenkeingriffen zu verbessern.

Die Erfindung löst diese Aufgabe mit einem Fahrstabilisierungsverfahren nach Anspruch 1, mit einer Fahrstabilisierungseinrichtung nach Anspruch 7 und mit einem Fahrzeug nach Anspruch 14.

Bei dem Fahrstabilisierungsverfahren wird zum Stabilisieren eines Fahrzeugs ein Lenkwinkel wenigstens einer gelenkten Vorderachse und/oder Zusatzachse des Fahrzeugs relativ zur Fahrzeuglängsachse durch automatisch erzwungenes bzw. elektronisch gesteuertes bzw. autonomes Lenken dieser Achse geändert. Das Fahrzeug ist insbesondere ein Nutzfahrzeug. Die Fahrstabilisierungseinrichtung ist entsprechend zum Stabilisieren des Fahrzeugs durch Ändern des Lenkwinkels der gelenkten Vorderachse und/oder Zusatzachse des Fahrzeugs relativ zur Fahrzeuglängsachse durch elektronisches Lenken dieser Achse ausgebildet.

Die Erfindung verbessert die Stabilisierung des Fahrzeugs gemäß der Erfindung dadurch, dass verfahrensgemäß die Bewegungsrichtung im Radaufstandspunkt eines an der gelenkten Zusatzachse angeordneten Zusatzachsenrades relativ zur Fahrzeuglängsachse ermittelt, insbesondere gemessen oder geschätzt bzw. berechnet, wird und der Lenkwinkel der gelenkten Zusatzachse in Abhängigkeit von dieser jeweils ermittelten Bewegungsrichtung eingestellt wird, um den Schräglaufwinkel des Zusatzachsenrades relativ zu seiner Bewegungsrichtung zu verringern. Die Fahrstabilisierungseinrichtung weist gemäß der Erfindung Schätzmittel auf zum Ermitteln der Bewegungsrichtung im Radaufstandspunkt des an der gelenkten Zusatzachse angeordneten Zusatzachsenrades relativ zur Fahrzeuglängsachse. Unter dem Ermitteln mittels der Schätzmittel ist vorliegend insbesondere auch ein Messen und/oder Berechnen zu verstehen, wobei bspw. mehrere bekannte, angenommene, eingestellte und/oder gemessene Größen, die den Fahrzustand und/oder Fahrzeugzustand des Fahrzeugs und/oder den Fahrbahnzustand charakterisieren, verarbeitet werden. Insbesondere werden diese Größen aus einem Speicher ausgelesen und/oder direkt von Sensoren bereitgestellt und von einem Prozessor nach festgelegten Rechenanweisungen verarbeitet. Der ermittelte Schräglaufwinkel kann somit ein, insbesondere mittels eines Sensors oder mittels mehrerer Sensoren, gemessener Schräglaufwinkel sein.

Weiter weist die Fahrstabilisierungseinrichtung gemäß der Erfindung Schräglaufwinkelverringerungsmittel auf zum Einstellen des Lenkwinkels der gelenkten Zusatzachse in Abhängigkeit von dieser jeweils ermittelten Bewegungsrichtung, um den Schräglaufwinkel des Zusatzachsenrades relativ zu seiner Bewegungsrichtung zu verringern.

Gemäß der Erfindung wird somit nicht versucht, mittels der Seitenführungskräfte des Zusatzachsenrades das Untersteuern oder Übersteuern zu verringern, was einen höheren Schräglaufwinkel zur Folge hätte. Stattdessen verringert die Erfindung den Schräglaufwinkel. Der Erfindung liegt dabei die Erkenntnis zugrunde, dass von einem Rad eine größere Bremskraft übertragen werden kann, wenn der Schräglaufwinkel dieses Rades möglichst gering ist. Das Fahrzeug kann somit an einzelnen Rädern zur Fahrzeugstabilisierung oder auch an allen Rädern effektiver abgebremst werden, wodurch mittels dieses Abbremsens einem Untersteuern oder Übersteuern entgegengewirkt wird. Insbesondere beim Übersteuern kann es vorkommen, dass das Heck des Fahrzeugs mit der gelenkten Zusatzachse so weit ausbricht, dass der Schräglaufwinkel auch bei stärkstem Einlenken der Zusatzachse nicht zu Null zurückgeführt werden kann. Jedoch kann der Schräglaufwinkel soweit reduziert werden, dass eine vergleichsweise größere Bremskraft übertragen werden kann. Dadurch ist das Fahrzeug besser beherrschbar und kann besser auf seine Spur zurückgeführt werden, da einerseits Seitenführungskräfte wieder besser wirken können und andererseits besser Bremskraft übertragen werden kann.

Gemäß einer Weiterbildung dieser Erfindung wird verfahrensgemäß in Erwiderung auf eine mittels einer Kippstabilisierungskontrolleinrichtung als über einem Kippgrenzwert befindlich erkannte Kippneigung des Fahrzeugs zusätzlich zum Veranlassen einer Fahrzeugverzögerung zum Verringern dieser Kippneigung ein Einstellen eines veränderten, insbesondere vergrößerten oder verkleinerten, Lenkwinkels bzw. eine Vergrößerung oder Verkleinerung des Lenkwinkels der gelenkten Vorderachse und/oder Zusatzachse veranlasst, um einem untersteuernd oder übersteuernd auf das Fahrzeug wirkenden Einfluss dieser Fahrzeugverzögerung entgegenzuwirken. Der Lenkwinkel ist dabei verändert bzw. vergrößert oder verkleinert gegenüber einem Lenkwinkel, der sich ohne eine von der Kippstabilisierungseinrichtung veranlasste Fahrzeugverzögerung einstellen würde, insbesondere gegenüber einer Fahrervorgabe durch ein Lenkrad des Fahrzeugs. Die Fahrstabilisierungseinrichtung weist gemäß dieser Weiterbildung der Erfindung Spurhaltemittel auf zum zusätzlichen Veranlassen der Vergrößerung bzw. Verkleinerung des Lenkwinkels der gelenkten Vorderachse und/oder Zusatzachse, um dem untersteuernd bzw. übersteuernd auf das Fahrzeug wirkenden Einfluss der Fahrzeugverzögerung entgegenzuwirken, die zum Verringern einer mittels der Kippstabilitätskontrolleinrichtung als über dem Kippgrenzwert befindlich erkannten Kippneigung des Fahrzeugs veranlasst wird.

Die Kippstabilitätskontrolleinrichtung ist insbesondere eine sog. Roll Stability Control (RSC)-Regelung und wirkt einem möglichen Kippen bzw. Überschlag des Fahrzeugs dadurch entgegen, dass vorbeugend die Geschwindigkeit des Fahrzeugs verringert wird. Insbesondere wird das Fahrzeug abgebremst, wobei beim Durchfahren einer Kurve eine Bremswirkung an den kurvenäußeren Rädern höher ist als eine Bremswirkung an den kurveninneren Rädern. Dadurch entsteht oftmals ein der Drehung des Fahrzeugs entgegenwirkendes Drehmoment bzw. der untersteuernd auf das Fahrzeug wirkende Einfluss. Durch die Vergrößerung des Lenkwinkels der gelenkten Vorderachse und/der Zusatzachse wird dieses Drehmoment bzw. dieser untersteuernd wirkende Einfluss kompensiert, so dass der Fahrer des Fahrzeugs nicht manuell die Lenkung stärker einschlagen muss, um seinen Bahnradius zu halten und um nicht aus der Kurve getragen zu werden. Alternativ kann auch ein übersteuernd auf das Fahrzeug wirkender Einfluss, insbesondere ein Ausbrechen des Fahrzeughecks, durch die Abbremsung bei der Kurvenfahrt, bspw. aufgrund von Reifeneigenschaften, entstehen, der ebenfalls mittels der Erfindung automatisch, in diesem Fall durch schwächeres Einlenken bzw. eine Verkleinerung des Lenkwinkels, kompensiert wird. Durch diese Kompensationen erhöhen sich der Komfort und die Sicherheit im Falle eines Eingriffs der Kippstabilitätskontrolleinrichtung.

Vorzugsweise weist die Erfindung zusätzlich auch die o.g. Weiterbildung auf, so dass sich insgesamt ein stabiles Fahrverhalten für das Fahrzeug ergibt, auch wenn das Fahrzeug stark untersteuert, stark übersteuert oder die Kippstabilitätskontrolleinrichtung bzw. RSC-Regelung eingreift. Der Eingriff in das Fahrverhalten des Fahrzeugs ist in jedem Fall effektiv und erhöht somit die Sicherheit des Fahrzeugs. Ferner ist der Eingriff sanft, was zu einem Zuwachs an Komfort führt. Schließlich ist der Eingriff insgesamt verschleißarm und somit auch aus wirtschaftlichen Gesichtspunkten günstig.

Gemäß einer bevorzugten Ausführungsform entspricht der Bahnradius, mit dem sich das Fahrzeug um einen Drehpunkt bewegt, auch im Falle einer von der Kippstabilitätskontrolleinrichtung veranlassten Fahrzeugverzögerung und Veränderung des Lenkwinkels im Wesentlichen einer Vorgabe über ein Lenkrad des Fahrzeugs. Vorzugsweise bleibt der Bahnradius, auf dem sich das Fahrzeug um den Drehpunkt bzw. durch die jeweilige Kurve bewegt, auch durch den Eingriff der Kippstabilitätskontrolleinrichtung im Wesentlichen unbeeinflusst, insbesondere unmittelbar vor und unmittelbar nach der von der Kippstabilitätskontrolleinrichtung veranlassten Fahrzeugverzögerung und Veränderung des Lenkwinkels im Wesentlichen identisch. Der Einfluss der Fahrzeugverzögerung wird somit derart durch die Veränderung des Lenkwinkels kompensiert, dass der Fahrer des Fahrzeugs nicht mit einer Änderung des Lenkeinschlags mittels des Lenkrads auf den Eingriff durch die Kippstabilitätskontrolleinrichtung reagieren muss. Die Spurhaltemittel sind erfindungsgemäß entsprechend ausgebildet. Insbesondere ziehen die Spurhaltemittel eine ermittelte Gierrate, den Lenkeinschlag des Lenkrads sowie ggf. Daten bzw. Signale weitere Sensoren heran, um den Lenkwinkel mittels sensierter Werte zu berechnen bzw. aus einer Tabelle auszuwählen.

Vorzugsweise wird eine Veränderung des Kurvenradius des Fahrzeugs bei einem Eingriff der Kippstabilitätskontrolleinrichtung sensiert bzw., insbesondere aus der Gierrate und der Geschwindigkeit des Fahrzeugs, bestimmt. Im Falle einer erkannten Abweichung wird der Lenkwinkel entsprechend verändert, so dass der Kurvenradius im Wesentlichen erhalten bleibt bzw. sich lediglich durch manuelle Lenkeingriffe des Fahrers ändert.

Alternativ oder zusätzlich wird der aktuelle Bremsdruck, insbesondere einer Pneumatik oder Hydraulik wenigstens einer Bremse des Fahrzeugs, gemessen und ausgewertet. Somit prädiziert die Fahrstabilisierungseinrichtung anhand des Bremsdrucks frühzeitig eine bevorstehende Fahrzeugverzögerung und damit eine Untersteuerneigung oder Übersteuerneigung des Fahrzeugs, noch ehe sich diese Fahrzeugverzögerung bzw. Untersteuerneigung oder Übersteuerneigung einstellt. Der Lenkwinkel wird in Erwiderung auf diese prädizierte Untersteuerneigung bzw. Übersteuerneigung verändert, so dass sich ein tatsächliches Untersteuern oder Übersteuern nicht einstellt oder zumindest nur stark abgeschwächt einstellt.

Gemäß einer bevorzugten Ausführungsform des Fahrstabilisierungsverfahrens wird zum Veranlassen der Fahrzeugverzögerung wenigstens eine Bremse, insbesondere Radbremse, des Fahrzeugs aktiviert. Die Fahrstabilisierungseinrichtung weist vorzugsweise Bremsaktivierungsmittel zum Aktivieren dieser Bremse zum Veranlassen der Fahrzeugverzögerung auf. Auf diese Weise kann das Fahrzeug schnell und gezielt an einzelnen, mehreren oder allen Rädern abgebremst werden, wobei die Bremskraft sehr genau dosiert werden kann. Alternativ oder zusätzlich wird das Fahrzeug bei einem Eingriff durch die Kippstabilitätskontrolleinrichtung durch Gaswegnehmen am Motor und/oder den Einsatz eines Retarders abgebremst bzw. verlangsamt.

Gemäß einer bevorzugten Ausführungsform des Fahrstabilisierungsverfahrens wird ein über einem festgelegten Untersteuergrenzwert liegendes und nachfolgend starkes Untersteuern genanntes Untersteuern oder ein über einem festgelegten Übersteuergrenzwert liegendes und nachfolgend starkes Übersteuern genanntes Übersteuern des Fahrzeugs erkannt. Weiter wird im Falle eines erkannten starken Untersteuerns oder starken Übersteuerns zusätzlich wenigstens ein Bremseingriff am Zusatzachsenrad der gelenkten Zusatzachse aktiviert. Die Fahrstabilisierungseinrichtung weist entsprechend Spurabweichungserkennungsmittel zum Erkennen des starken Untersteuerns oder starken Übersteuerns auf. Weiter weist die Fahrstabilisierungseinrichtung Bremseingriffsmittel zum Aktivieren des Bremseingriffs im Falle des erkannten starken Untersteuerns oder starken Übersteuerns auf. Insbesondere aktivieren die Bremseingriffsmittel den Bremseingriff nur dann, wenn das starke Untersteuern oder Übersteuern erkannt wurde.

Somit kann ein leichtes Untersteuern oder Übersteuern durch Lenkeingriffe der Zusatzachse ausgeglichen werden, ohne dass Bremseingriffe erforderlich sind. Bei starkem Untersteuern oder Übersteuern werden hingegen zu den Lenkeingriffen Bremseingriffe ergänzt, wobei die Bremseingriffe aufgrund der Verringerung des Schräglaufwinkels sehr effektiv erfolgen können.

Gemäß einer bevorzugten Ausführungsform des Fahrstabilisierungsverfahrens wird nur im Falle des erkannten starken Untersteuerns oder starken Übersteuerns der Lenkwinkel der gelenkten Zusatzachse in Abhängigkeit von der ermittelten Bewegungsrichtung eingestellt, um den Schräglaufwinkel der Zusatzachse zu verringern. Die Schräglaufwinkelverringerungsmittel der Fahrstabilisierungseinrichtung sind entsprechend ausgebildet. Bei leichtem Untersteuern oder leichtem Übersteuern wird somit nicht der Schräglaufwinkel verringert, sondern direkt mittels der Lenkeingriffe versucht, dem Untersteuern oder Übersteuern entgegenzuwirken, so dass keine Bremseingriffe erforderlich sind.

Die Fahrstabilisierungseinrichtung weist Mittel zum Durchführen des erfindungsgemäßen Fahrstabilisierungsverfahrens auf, insbesondere eine Steuerelektronik mit Rechenmitteln, insbesondere einem Prozessor, und ggf. Speichermitteln.

Das erfindungsgemäße Fahrzeug ist insbesondere ein Kraftfahrzeug mit einem Motor, insbesondere Verbrennungsmotor. Dieses Fahrzeug weist wenigstens eine lenkbare Vorderachse und/oder wenigstens eine lenkbare Zusatzachse auf. Weiter weist das Fahrzeug die erfindungsgemäße Fahrstabilisierungseinrichtung auf.

Weitere Ausführungsformen ergeben sich aus den Ansprüchen sowie aus den anhand der Zeichnung näher erläuterten Ausführungsbeispielen. In der Zeichnung zeigen:
- Fig. 1: eine Fahrstabilisierungseinrichtung in einem Fahrzeug gemäß einem Ausführungsbeispiel der Erfindung bei langsamer Kurvenfahrt im Wesentlichen ohne Schräglauf der Räder;
- Fig. 2: Räder der linken Seite des Fahrzeugs vom Ausführungsbeispiel gemäß Fig. 1 mit Schräglauf der Räder bei neutralem Fahrverhalten;
- Fig. 3: ein Blockschaltbild mit der Fahrstabilisierungseinrichtung von Fig. 1;
- Fig. 4: ein Flussdiagramm zur Veranschaulichung des Fahrstabilisierungsverfahrens gemäß einem ersten Ausführungsbeispiel der Erfindung;
- Fig. 5: ein Flussdiagramm zur Veranschaulichung des Fahrstabilisierungsverfahrens gemäß einem zweiten Ausführungsbeispiel der Erfindung;
- Fig. 6: die Räder der linken Seite des Fahrzeugs analog zur Darstellung gemäß Fig. 2, jedoch mit erhöhtem Lenkeinschlag an der Vorderachse und Zusatzachse bei einem von einer Kippstabilitätskontrolleinrichtung verursachten Bremseingriff;
- Fig. 7: die Räder der linken Seite des Fahrzeugs analog zur Darstellung gemäß Fig. 2, jedoch mit reduziertem Schräglaufwinkel an der Zusatzachse bei starkem Untersteuern des Fahrzeugs;
- Fig. 8: die Räder der linken Seite des Fahrzeugs analog zur Darstellung gemäß Fig. 2, jedoch mit reduziertem Schräglaufwinkel an der Zusatzachse bei starkem Untersteuern des Fahrzeugs auf eine gegenüber Fig. 7 andere Weise, und
- Fig. 9: die Räder der linken Seite des Fahrzeugs analog zur Darstellung gemäß Fig. 2, jedoch mit reduziertem Schräglaufwinkel an der Zusatzachse bei starkem Übersteuern des Fahrzeugs.

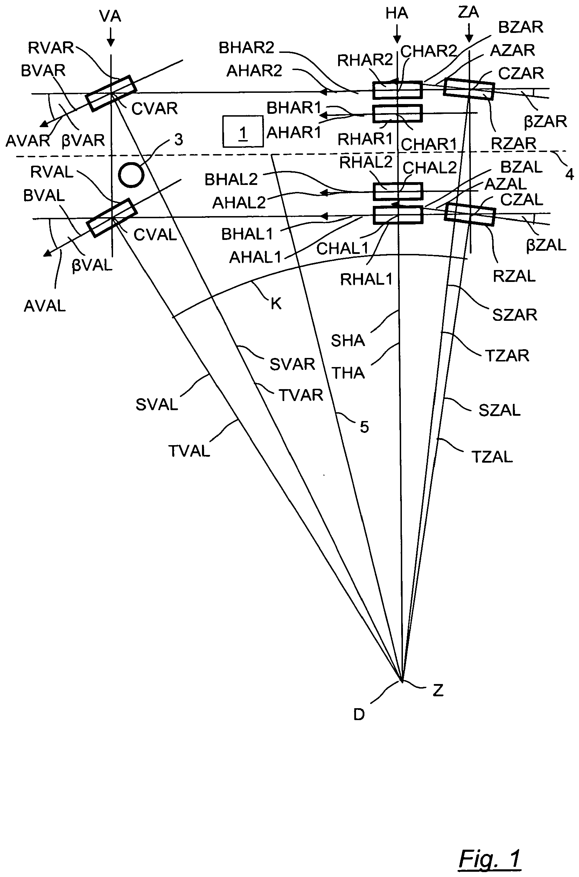

Fig. 1 zeigt eine Fahrstabilisierungseinrichtung 1 in einem Fahrzeug 2 gemäß einem Ausführungsbeispiel der Erfindung. Vom Fahrzeug 2 sind neben der Fahrstabilisierungseinrichtung 1 und einem Lenkrad 3 lediglich seine Räder R, nämlich ein linkes Vorderachsenrad RVAL und ein rechtes Vorderachsenrad RVAR einer Vorderachse VA des Fahrzeugs 2, linke Hinterachsenräder RHAL1 und RHAL2 sowie rechte Hinterachsenräder RHAR1 und RHAR2 einer Hinterachse HA des Fahrzeugs 2 sowie ein linkes Zusatzachsenrad RZAL und ein rechtes Zusatzachsenrad RZAR einer Zusatzachse ZA des Fahrzeugs 2, dargestellt. Nachfolgend werden die Räder RVAL und RVAR der Vorderachse VA auch mit RVA, die Räder RHAL1, RHAL2, RHAR1 und RHAR2 der Hinterachse auch mit RHA und die Räder RZAL und RZAR der Zusatzachse ZA auch mit RZA bezeichnet.

Die linken Räder RVAL, RHAL1, RHAL2 und RZAL sind bezogen auf die Fahrrichtung des Fahrzeugs 2 links und die rechten Räder RVAR, RHAR1, RHAR2 und RZAR rechts von einer Fahrzeugslängsachse 4 des Fahrzeugs 2 angeordnet.

Das Fahrzeug 2 befindet sich in einer Kurvenfahrt, die als Drehung des Fahrzeugs 2 um einen Drehpunkt D aufgefasst werden kann. Die Räder R weisen dabei jeweils einen gleichbleibenden Abstand zum Drehpunkt D auf. Das Fahrzeug 2 bewegt sich auf einer Kurvenbahn mit einem konstanten Bahnradius 5. Der Bahnradius 5 ist die Strecke zwischen einem Punkt am Fahrzeug, vorzugsweise einem auf der Fahrzeuglängsachse 4 gelegenen Punkt, insbesondere dem Fahrzeugschwerpunkt, zum Drehpunkt D. Gedachte Strecken S zwischen den Radaufstandspunkten C der Räder R und dem Drehpunkt D stehen jeweils senkrecht zu Bewegungsrichtungen B der Räder R im Radaufstandspunkt C des jeweiligen Rades R. Die Strecken S sind gemäß dem jeweiligen Rad R mit einem vorangestellten S anstelle des vorangestellten R, bspw. mit SVAL für die Strecke zwischen dem Radaufstandspunkt CVAL des Rades RVAL und dem Drehpunkt D, bezeichnet. Bezeichner für mehrere oder für die einzelnen Strecken S sowie weitere, noch einzuführende, auf die Räder R bezogene Bezeichner werden analog zu den Bezeichnern der Räder R gebildet.

Dargestellt ist in Fig. 1 ein Sonderfall, der praktisch nur annähernd bei sehr langsamer Fahrt des Fahrzeugs 2 eintritt, wobei nämlich die Räder R im Wesentlichen keinen Schräglauf aufweisen. D.h. die Ausrichtung bzw. Drehrichtung A der Räder R senkrecht zur ihrer jeweiligen Drehachse ist im Wesentlichen deckungsgleich mit ihrer Bewegungsrichtung B. Die Drehachsen aller Räder R sind auf ein gemeinsames Zentrum Z ausgerichtet, was aufgrund der nicht vorhandenen Schräglaufwinkel und der daraus folgenden Deckungsgleichheit von Verlängerungen T der Drehachsen der Räder R mit den Strecken S dazu führt, dass der Drehpunkt D und das Zentrum Z deckungsgleich sind. Das Fahrzeug 2 behält bei seiner Fahrt einen gleichbleibenden Abstand zu einem Kreisbogen K eines Kreises um den Drehpunkt D bei.

Lenkwinkel βVA an der Vorderachse VA können dabei von einem Fahrer des Fahrzeugs 2 mittels seines Lenkrads 3 vorgegeben werden. Die Hinterachse HA ist eine feststehende Antriebsachse, wobei die Drehrichtung bzw. Längsrichtung AHA der Räder RAH parallel zur Fahrzeuglängsachse 4 verläuft. Die Zusatzachse ZA kann prinzipiell an beliebiger Stelle am Fahrzeug angeordnet und bspw. eine Vorlaufachse oder Nachlaufachse, insbesondere gegenüber der Hinterachse HA, sein. Die Verlängerungen der Achsen aller Räder R können sich im gemeinsamen Zentrum Z treffen. Alternativ können die Räder RZA der Zusatzachse ZA auch stärker, weniger stark oder überhaupt nicht eingeschlagen sein. Der Lenkwinkel βZA der Zusatzachse ZA kann allein oder u.a. abhängig vom Lenkwinkel βVA der Vorderachse VA oder unabhängig davon sein.

Im gezeigten Ausführungsbeispiel ist die Zusatzachse ZA eine Nachlaufachse, wobei die Längsrichtung AZA des jeweiligen Zusatzachsenrades RZA automatisch in Abhängigkeit von der Längsrichtung AVA der Vorderachsenräder RVA derart eingestellt wird, dass sich die Verlängerungen der Achsen aller Räder R standardmäßig bzw. ohne weitere Eingriffe einer Fahrdynamikregelung im gemeinsamen Zentrum Z treffen. Abweichungen davon, die sich durch die Erfindung ergeben, werden nachfolgend erläutert.

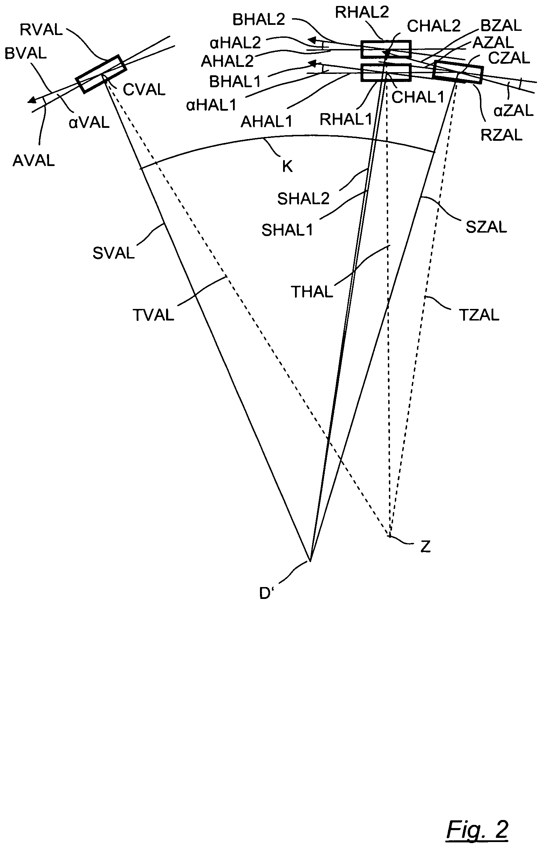

Fig. 2 veranschaulicht die Bewegung des Fahrzeugs 2 des ersten Ausführungsbeispiels von Fig. 1 bei einem Schräglauf der Räder R, wobei hier, wie auch in nachfolgenden Figuren, lediglich die Räder RVAL, RHAL und RZAL der linken Seite des Fahrzeugs 2 dargestellt sind. Für die Räder RVAR, RHAR und RZAR der rechten Seite des Fahrzeugs 2 ergibt sich Entsprechendes.

Es wird angenommen, dass sich das Fahrzeug 2 mit gegenüber der Darstellung in Fig. 1 vergleichsweise größerer Geschwindigkeit durch die Kurve bewegt. Dabei stellen sich Schräglaufwinkel α zwischen der Längsrichtung A und der Bewegungsrichtung B eines jeweiligen Rades R ein. Weiter wird angenommen, dass das Fahrzeug 2 neutral ausgelegt ist bzw. weder zum Untersteuern noch zum Übersteuern neigt. In diesem Fall ist der Schräglaufwinkel αVAL am linken Vorderrad RVAL im Wesentlichen identisch mit den Schräglaufwinkeln αHAL1, αHAL2 und αZAL an den Rädern RHAL1, RHAL2 und RZAL der Hinterachse HA bzw. Zusatzachse ZA des Fahrzeugs 2. Ein Drehpunkt D', um den sich das Fahrzeug 2 dreht, fällt daher zwar nicht mit dem Zentrum Z zusammen, weist jedoch im Wesentlichen den gleichen Abstand zu einem Schwerpunkt des Fahrzeug 2 auf wie das Zentrum Z. Dieses neutrale Fahrverhalten oder ein leicht untersteuernd wirkendes Fahrverhalten wird im Allgemeinen für ein Fahrzeug angestrebt. Erreicht wird dieses Fahrverhalten hauptsächlich durch eine geeignet gewählte Lastverteilung am Fahrzeug 2.

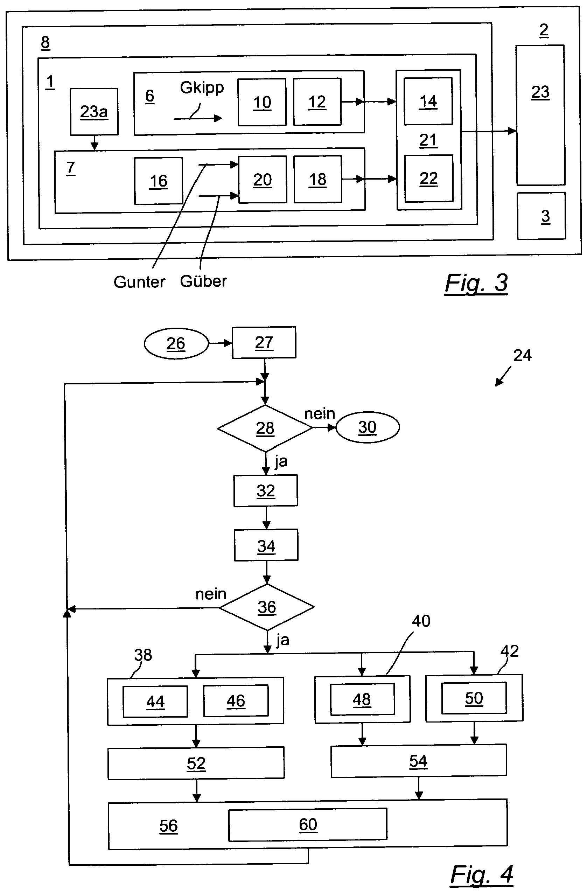

Fig. 3 zeigt ein Blockkastenbild der Fahrstabilisierungseinrichtung 1 des Ausführungsbeispiels gemäß Fig. 1. Die Fahrstabilisierungseinrichtung 1 weist eine Kippstabilitätskontrolleinrichtung 6 und eine Gierregelungskontrolleinrichtung 7 auf. Eine Steuereinrichtung 8 stellt bspw. mittels eines Prozessors zum Rechnen und mittels Speichermitteln eine entsprechende Funktionalität bereit. Die Steuereinrichtung 8 ist wiederum im Fahrzeug 2 angeordnet.

Die Gierregelungskontrolleinrichtung 7 führt eine Gierregelung durch und wirkt somit einem Schleudern des Fahrzeugs 2 entgegen. Die Kippstabilitätskontrolleinrichtung 6 führt eine Kippstabilitätsregelung durch und wirkt dadurch einem Kippen des Fahrzeugs 2 um seine Längsachse 4 bzw. Umkippen des Fahrzeugs 2 entgegen. Die Fahrstabilisierungseinrichtung 1 führt in Abhängigkeit von Daten bzw. Steuersignalen das erfindungsgemäße Fahrstabilisierungsverfahren durch, verändert insbesondere den Lenkwinkel β an der Vorderachse VA und/oder an der Zusatzachse ZA, wenn mittels der Kippstabilitätskontrolleinrichtung 6 ein Abbremsen des Fahrzeugs 2 veranlasst wird.

Die Fahrstabilisierungseinrichtung 1 weist ferner Spurabweichungserkennungsmittel bzw. Spurabweichungsprädiktionsmittel 10, Spurhaltemittel 12, Bremsaktivierungsmittel 14, Schätzmittel 16, Schräglaufwinkelverringerungsmittel 18, Fahrtrichtungsabweichungserkennungsmittel 20 und zusammen mit den Bremsaktivierungsmitteln 14 in einem Bremsansteuerungsblock 21 angeordnete Bremseingriffsmittel 22 auf. Die Bremsaktivierungsmittel 14 betätigen Bremsen 23 des Fahrzeugs 2, um das Fahrzeug 2 abzubremsen und durch die daraus folgende geringere Geschwindigkeit die Kippneigung des Fahrzeugs 2 bei der Kurvenfahrt bzw. bei einem Ausweichmanöver mit eingeschlagenem Lenkrad 3 zu verringern, wenn eine erkannte Kippneigung einen Kippgrenzwert GKipp übersteigt.

Die Spurabweichungserkennungsmittel bzw. Spurabweichungsprädiktionsmittel 10 erkennen daraufhin eine Untersteuerneigung oder Übersteuerneigung des Fahrzeugs 2 und/oder prädizieren das unmittelbar bevorstehende Eintreten eines Untersteuerns oder Übersteuerns bspw. anhand eines sensierten Bremsdrucks oder anhand von die Bremse 23 steuernden Steuersignalen. In Erwiderung darauf verändern die Spurhaltemittel 12 zugleich den Lenkeinschlag bzw. den Lenkwinkel βVA an der Vorderachse VA und ggf. den Lenkwinkel βZA an der Zusatzachse ZA des Fahrzeugs 2, um somit die Spur im Wesentlichen zu halten. Insbesondere wird gegenüber einem Lenkwinkel βZA, der sich ohne erkannte Untersteuerneigung oder Übersteuerneigung bei ansonsten gleichem Fahrzeugzustand bzw. Fahrzustand einstellen würde, bspw. gegenüber einem durch die Stellung des Lenkrads 3 vorgegebenen Lenkwinkel βZA zur Kompensation einer Untersteuerneigung ein vergrößerter und zur Kompensation einer Übersteuerneigung ein verkleinerter Lenkwinkel βZA an der Zusatzachse ZA eingestellt.

Die Schätzmittel 16 ermitteln bspw. durch Messung mittels eines Sensors 23a und/oder durch Berechnung die Bewegungsrichtung B im Radaufstandspunkt C des jeweiligen Rades R bzw. den Schräglaufwinkel α dieses Rades R. Die Schräglaufwinkelverringerungsmittel 18 sind zum Einstellen des Lenkwinkels βZA der Zusatzachse ZA ausgebildet, um den Schräglaufwinkel αZA der Zusatzachsenräder RZA relativ zu ihrer jeweiligen Bewegungsrichtung BZA zu verringern. Der jeweilige Schräglaufwinkel αZA wird insbesondere dann verringert, wenn die Fahrtrichtungsabweichungserkennungsmittel 20 ein starkes Untersteuern oder starkes Übersteuern ermitteln, wobei ein starkes Untersteuern ein Untersteuern über einem definierten Untersteuergrenzwert Gunter und ein starkes Übersteuern ein Übersteuern über einem definierten Übersteuergrenzwert Güber ist. Die Bremseingriffsmittel 22 ermöglichen zugleich mit der Verringerung des Schräglaufwinkels αZA durch die Schräglaufwinkelverringerungsmittel 18 einen Bremseingriff an der Zusatzachse ZA bzw. am linken Zusatzachsenrad RZAL und/oder am rechten Zusatzachsenrad RZAR.

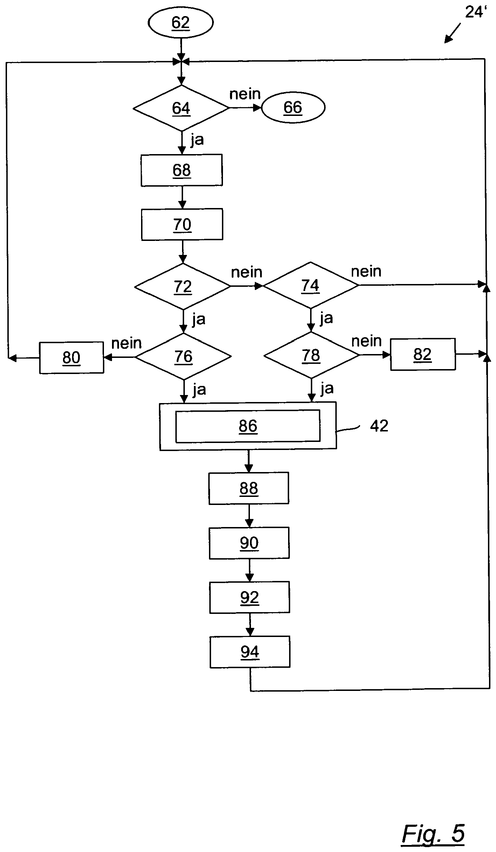

Abweichend vom beschriebenen Ausführungsbeispiel kann die Kippstabilitätskontrolleinrichtung 6 ggf. zusammen mit den Bremsaktivierungsmitteln 14 auch entfallen, so dass mittels der Fahrstabilisierungseinrichtung 1 zwar das nachfolgend zu Fig. 5, nicht jedoch das nachfolgend zu Fig. 4 beschriebene Verfahren ausgeführt werden kann. Gemäß einem weiteren alternativen Ausführungsbeispiel entfällt stattdessen die Gierregelungskontrolleinrichtung 7 ggf. zusammen mit den Bremseingriffsmitteln 22, so dass mittels der Fahrstabilisierungseinrichtung 1 zwar das Verfahren gemäß Fig. 4, nicht jedoch das Verfahren gemäß Fig. 5 ausgeführt werden kann. Ggf. kann entweder die erfindungsgemäß beschriebene Kippstabilitätskontrolleinrichtung 6 oder die erfindungsgemäß beschriebene Gierregelungskontrolleinrichtung 7 nicht ersatzlos entfallen, sondern durch eine andersartig, insbesondere herkömmlich, ausgebildete Einrichtung zur Kippstabilitätskontrolle bzw. Gierregelung ersetzt sein.

Fig. 4 und Fig. 5 zeigen ein erstes Fahrstabilisierungsverfahren 24 gemäß einem ersten Ausführungsbeispiel der Erfindung bzw. ein zweites Fahrstabilisierungsverfahren 24' gemäß einem zweiten Ausführungsbeispiel der Erfindung. Vorzugsweise sind die in den Figuren 4 und 5 dargestellten Verfahrensschritte Teile eines gemeinsamen Fahrstabilisierungsverfahrens 24 bzw. 24', wobei insgesamt mittels allen diesen Verfahrensschritten die Fahrstabilität des Fahrzeugs 2 verbessert wird.

Das Fahrstabilisierungsverfahren 24 gemäß Fig. 4 startet in einem Schritt 26. Der Bahnradius 5 wird durch eine Vorgabe 27 mittels des Lenkrads 3 von einem Fahrer des Fahrzeugs 2 vorgegeben. Nachfolgende Verfahrensschritte finden nur dann statt, wenn die Kippstabilitätskontrolleinrichtung 6 aktiv ist, was durch eine Abfrage 28, ob dies der Fall ist, veranschaulicht ist. Andernfalls ist das Ende des Fahrstabilisierungsverfahrens 24, soweit dargestellt, gemäß einem Schritt 30 erreicht.

Zumindest dann, wenn die Kippstabilitätskontrolleinrichtung 6 gemäß der Abfrage 28 aktiv ist, werden gemäß einem Schritt 32 Daten ermittelt bzw. sensiert, die den aktuellen Fahrzeugzustand bzw. Fahrzustand des Fahrzeugs 2 charakterisieren. Nachfolgend ermittelt die Kippstabilitätskontrolleinrichtung 6 gemäß einem Schritt 34 die aktuelle Kippneigung bzw. ein Wanken des Fahrzeugs 2 mittels der im Schritt 32 ermittelten Daten. Die Kippstabilitätskontrolleinrichtung 6 ist dabei insbesondere eine sog. Roll Stability Control (RSC). Insbesondere zieht die Kippstabilitätskontrolleinrichtung 6 zum Ermitteln der Kippneigung Daten wie die Geschwindigkeit des Fahrzeugs 2, den Lenkwinkel βVA, βZA an der Vorderachse VA bzw. Hinterachse ZA, Daten eines Gierratensensors sowie ggf. weiterer Beschleunigungssensoren und/oder Daten von Achslastsensoren zum Ermitteln der aktuellen Kippneigung heran.

Bei einer ermittelten vergleichsweise geringen Kippneigung wird nach einer Abfrage 36 wieder mit der Abfrage 28 fortgefahren. Wenn jedoch gemäß der Abfrage 36 festgestellt wird, dass die ermittelte Kippneigung den Kippgrenzwert GKipp übersteigt, wird parallel mit Schritten 38, 40 und 42 fortgefahren. Gemäß dem Schritt 38 wird eine Fahrzeugverzögerung vorgenommen bzw. veranlasst. Insbesondere werden gemäß einem Schritt 44 mehrere oder vorzugsweise alle Radbremsen 23 des Fahrzeugs 2 aktiviert bzw. es erfolgt eine Bremsdruckerhöhung. Ferner wird gemäß einem Schritt 46 Gas weggenommen bzw. der mittels eines Gaspedals vom Fahrer vorgegebene Geschwindigkeitswunsch bzw. Beschleunigungswunsch derart manipuliert, dass sich eine gegenüber diesem Wunsch geringere Fahrzeuggeschwindigkeit bzw. eine Verzögerung des Fahrzeugs 2 einstellt.

Gemäß dem Schritt 40 wird der Lenkwinkel βVA an der Vorderachse VA geändert. Insbesondere wird gemäß einem Schritt 48 bei Aktivierung der Radbremsen 23 in Erwiderung auf die erkannte Kippneigung ein veränderter Lenkwinkel αVA, insbesondere gegenüber dem vom Fahrer vorgegebenen oder auch schon mittels anderer Systeme manipulierten Lenkwinkel βVA eingestellt. Elektronisch wird dabei ein Zusatzlenkwinkel an der Vorderachse VA bzw. an beiden Rädern RVAL und RVAR der Vorderachse VA eingestellt. Ein Lenkgestänge des Fahrzeugs 2 kann derart ausgebildet sein, dass auf der linken Seite des Fahrzeugs 2 ggf. andere Lenkwinkel β bzw. Zusatzlenkwinkel als auf der rechten Seite des Fahrzeugs 2 eingestellt werden, damit die Verlängerungen TVA der Räder RVA sich beide im gemeinsamen Zentrum Z schneiden und damit sich gleiche oder ähnliche Schräglaufwinkel αVA an beiden Rädern RVA der Vorderachse VA einstellen.

Der Lenkwinkel β wird in Abhängigkeit von einer ermittelten oder prädizierten Veränderung des Bahnradius 5 des Fahrzeugs 2 eingestellt, insbesondere in Abhängigkeit von der Gierrate in Verbindung mit der Geschwindigkeit des Fahrzeugs 2 bzw. der Änderung der Gierrate und der Geschwindigkeit. Indirekt hängt der Lenkwinkel β somit von der mittels der Kippstabilitätskontrolleinrichtung 6 veranlassten bzw. gewünschten Fahrzeugverzögerung ab.

Gemäß dem Schritt 42 wird auch der Lenkwinkel βZA an der Zusatzachse ZA geändert, insbesondere gemäß einem Schritt 50 ein veränderter Lenkwinkel βZA eingestellt. Alternativ zum gezeigten Ausführungsbeispiel kann entweder der Schritt 40 mit dem Schritt 48 oder der Schritt 42 mit dem Schritt 50 auch entfallen. Der Schritt 40 kann insbesondere dann entfallen, wenn die Zusatzachse ZA, nicht jedoch wenn die Vorderachse VA elektronisch bzw. automatisch erzwungen lenkbar ist. Der Schritt 42 kann alternativ insbesondere dann entfallen, wenn die Vorderachse VA, nicht jedoch die Zusatzachse ZA elektronisch bzw. automatisch erzwungen lenkbar ist.

Das Vornehmen der Fahrzeugverzögerung gemäß dem Schritt 38 hat einen untersteuernd oder übersteuernd auf das Fahrzeug 2 wirkenden Einfluss gemäß einem Schritt 52. Die veränderten Lenkwinkel αVA bzw. αZA an der Vorderachse VA bzw. an der Zusatzachse ZA des Fahrzeugs 2 wirken gemäß einem Schritt 54 diesem untersteuernd bzw. übersteuernd wirkenden Einfluss gemäß dem Schritt 52 entgegen. Dabei werden die Lenkwinkel αVA und αZA bspw. in Abhängigkeit von der ermittelten Bremswirkung oder von einer, insbesondere von der Kippstabilitätskontrolleinrichtung 6 veranlassten, Bremsdruckerhöhung zum Abbremsen des Fahrzeugs 2 eingestellt. Insgesamt folgt aus den Schritten 52 und 54 somit, dass das Fahrzeug gemäß einem Schritt 56 stabilisiert wird bzw. stabilisiert bleibt. Insbesondere bleibt gemäß einem Schritt 60 der Bahnradius 5, auf dem das Fahrzeug 2 sich bewegt, im Wesentlichen erhalten. Dabei verringert sich die Gierrate aufgrund abnehmender Fahrzeuggeschwindigkeit. Es folgt wiederum die Abfrage 28.

Bei weiteren Durchgängen wird der Lenkwinkel α nur dann weiter vergrößert oder verkleinert, wenn eine größere Untersteuerneigung oder Übersteuerneigung bzw. ein weiter erhöhter Bremsdruck festgestellt oder prädiziert wird. Wenn dagegen eine niedrigere Untersteuerneigung oder Übersteuerneigung bzw. ein wieder verringerter Bremsdruck festgestellt oder prädiziert wird, wird dagegen ein weniger stark veränderter bzw. manipulierter Lenkwinkel αVA bzw. αZA eingestellt. Insbesondere wird dann, wenn gemäß der Abfrage 36 festgestellt wird, dass die Kippneigung nicht den Kippgrenzwert übersteigt, wieder der jeweils der durch den Fahrerwunsch vorgegebene Lenkwinkel β bzw. die durch den Fahrerwunsch vorgegebene Längsrichtung A der Räder R eingestellt.

Fig. 5 zeigt das zweite Fahrstabilisierungsverfahren 24', welches in einem Schritt 62 startet und nach einer Abfrage 64 endet, wenn die Fahrstabilisierungseinrichtung 1 nicht aktiv ist. Wenn jedoch die Fahrstabilisierungseinrichtung 1 gemäß der Abfrage 64 aktiv ist, werden gemäß einem Schritt 68 die Bewegungsrichtungen B der Räder R in ihren jeweiligen Radaufstandspunkten C ermittelt. Das Ermitteln ist das dabei ein Messen, insbesondere Sensieren mittels des Sensors 23a oder mehrerer Sensoren oder Berechnen anhand von eingestellten Größen, wie einem vom Fahrer vorgegebenen Lenkwinkel, sowie anhand von sensierten Daten, wie der Fahrzeuggeschwindigkeit bzw. den Raddrehzahlen und/oder der Gierrate und/oder Querbeschleunigung des Fahrzeugs 2. Anhand der jeweils ermittelten Bewegungsrichtung B wird in einem Schritt 70 der Schräglaufwinkel α vorzugsweise von jedem der Räder R ermittelt. Es folgen Abfragen 72 und 74, ob das Fahrzeug 2 untersteuert bzw. übersteuert. Auch das Untersteuern bzw. Übersteuern wird mittels sensierter Daten, insbesondere der Gierrate sowie ggf. weiterer Daten, ermittelt. Die Abfragen 72 und 74 können dabei auch untereinander vertauscht sein.

Wenn das Fahrzeug 2 weder untersteuert noch übersteuert, wird wieder mit der Abfrage 64 fortgefahren. Andernfalls wird gemäß einer Abfrage 76 bzw. 78 unterschieden, ob das Fahrzeug 2 stark untersteuert bzw. übersteuert oder nicht. Insbesondere wird die Abweichung des tatsächlichen Kurses des Fahrzeugs 2 von einem Kurs, der vom Fahrer mittels des Lenkrads 3 vorgegeben ist, bzw. die Abweichung des tatsächlichen vom vorgegebenen Bahnradius 5 ermittelt und mit dem Untersteuergrenzwert Gunter und/oder mit dem Übersteuergrenzwert Güber verglichen. Bei vergleichsweise geringem Untersteuern gemäß der Abfrage 76 wird gemäß einem Schritt 80 ein größerer Lenkwinkel αZA an der Zusatzachse ZA eingestellt. Entsprechend wird bei vergleichsweise geringem Übersteuern gemäß der Abfrage 78 in einem Schritt 82 ein verringerter Lenkeinschlag bzw. Lenkwinkel αZA an der Zusatzachse ZA eingestellt. Der Lenkeinschlag αZA ist dabei insbesondere als größer bzw. geringer gegenüber dem gemäß Fig. 1 nach Maßgabe des Lenkeinschlags αVA an der Vorderachse VA eingestellten Lenkeinschlag αZA an der Zusatzachse ZA zu verstehen.

Wenn dagegen ein starkes Untersteuern oder starkes Übersteuern festgestellt wird, wird gemäß einem Schritt 84 der Lenkwinkel βZA der Zusatzachse ZA geändert, wobei dieser Lenkwinkel βZA gemäß einem Schritt 86 gemäß der jeweiligen Bewegungsrichtung BZA des jeweiligen Rades RZA an der Zusatzachse ZA eingestellt wird. Dadurch wird gemäß einem Schritt 88 der Schräglaufwinkel αZA an den Rädern RZA der Zusatzachse ZA verringert bzw. ein verringerter Schräglaufwinkel αZA eingestellt. Vorzugsweise wird dieser Schräglaufwinkel αZA dabei im Wesentlichen auf 0 verringert, um nachfolgend vergleichsweise höhere Bremskräfte übertragen zu können. Insbesondere bei starkem Übersteuern kann der Schräglaufwinkel αZA möglicherweise nicht zu 0 zurückgeführt werden, da ein maximaler Lenkeinschlag βZA an der Zusatzachse ZA zuvor erreicht wird. In diesem Fall wird der maximal mögliche Lenkeinschlag βZA an der Zusatzachse ZA eingestellt und damit der Schräglaufwinkel αZA an der Zusatzachse ZA soweit wie möglich verringert.

Nachfolgend kann gemäß einem Schritt 90 ein Bremseingriff, insbesondere an den Rädern RZA der Zusatzachse ZA aktiviert werden, der aufgrund der minimierten Schräglaufwinkel αZA wirkungsvoll einem weiteren seitlichen Ausbrechen des Fahrzeughecks oder Schieben des Fahrzeugs 2 über seine Vorderachse VA entgegenwirkt. Das Fahrzeug 2 wird somit gemäß einem Schritt 92 stabilisiert. Nachfolgend kann der Bremseingriff gemäß einem Schritt 94 wieder deaktiviert werden. Es folgt wiederum die Abfrage 64.

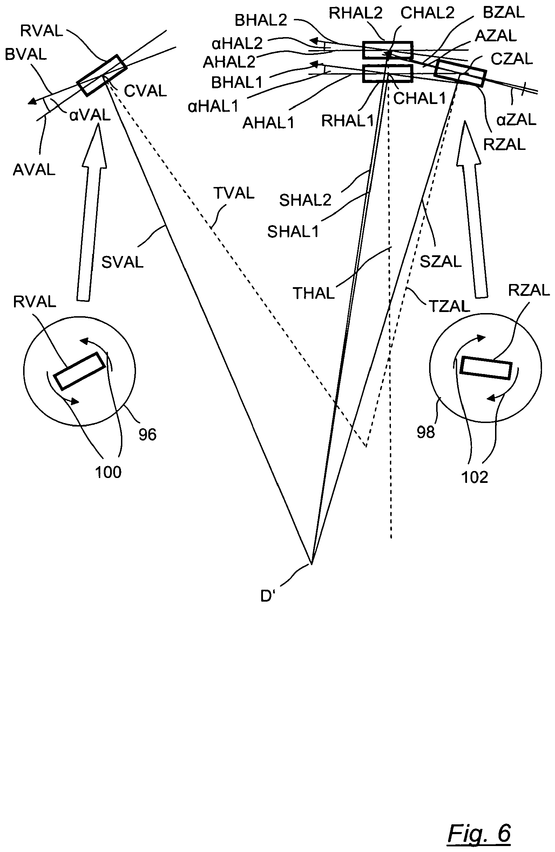

Fig. 6 zeigt die Räder RVAL, RHAL1, RHAL2 und RZAL der linken Seite des Fahrzeugs 2 analog zur Darstellung gemäß Fig. 2, jedoch mit gegenüber der Darstellung gemäß Fig. 2 bzw. gegenüber einem mittels eines Lenkeinschlags des Lenkrads 3 gegebenen Fahrerwunsch erhöhtem Lenkeinschlag βVA, βZA an der Vorderachse VA und an der Zusatzachse ZA. Dieser erhöhte Lenkeinschlag βVA, βZA dient der Kompensation einer Untersteuerneigung bei einem Bremseingriff, der von der Kippstabilitätskontrolleinrichtung 6 veranlasst ist.

In Kreisen 96 und 98 sind zum Vergleich die Räder RVAL und RZAL mit ihrer jeweiligen Längsrichtung AVAL bzw. AZAL gemäß Fig. 2 dargestellt. Weiter sind Pfeile 100 im Kreis 96 dargestellt, die veranschaulichen, dass das linke Vorderrad RVAL, ausgehend von der Darstellung gemäß Fig. 2 bzw. im Kreis 96, links gedreht und damit weiter eingeschlagen wird, um zur Darstellung gemäß Fig. 6 (oben) zu gelangen. Entsprechend veranschaulichen Pfeile 102 im Kreis 98 eine Rechtsdrehung bzw. ein weiteres Einschlagen des Zusatzachsenrades RZAL in der Darstellung gemäß Fig. 6 (oben) gegenüber der Darstellung gemäß Fig. 2 bzw. im Kreis 98. Dabei müssen die Drehachsen der Räder R, wie in Fig. 6 gezeigt, sich nicht zwangsläufig in einem gemeinsamen Punkt schneiden. Der Drehpunkt D1' ist jedoch gegenüber der Darstellung gemäß Fig. 2 unverändert bzw. weist denselben Abstand zum Fahrzeug 2 auf, so dass trotz des Bremseingriffs durch die stärker eingeschlagenen Räder RVA und RZA kein Untersteuern stattfindet bzw. das Fahrzeug 2 auf seinem gewünschten Bahnradius 5 stabilisiert ist. Dabei sind die Schräglaufwinkel α gegenüber der Darstellung in Fig. 2 verändert.

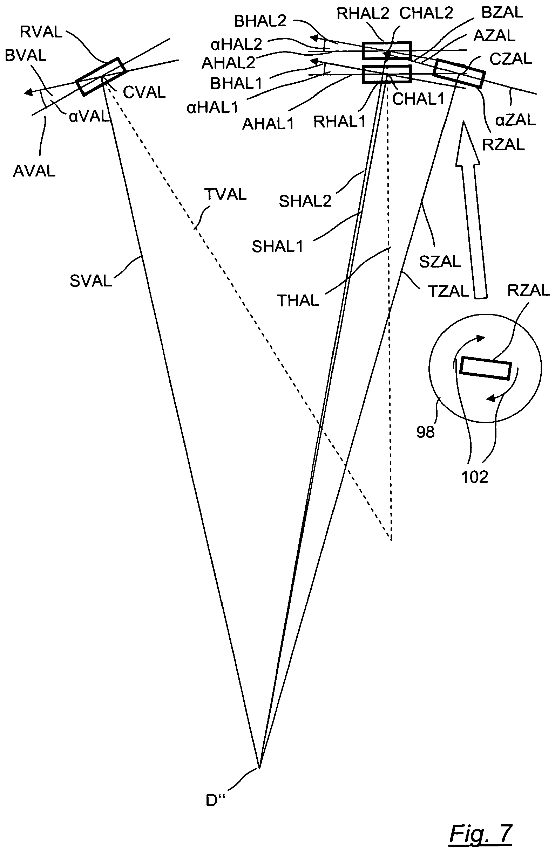

Fig. 7, Fig. 8 und Fig. 9 zeigen ebenfalls die Räder RVAL, RHAL1, RHAL2 und RZAL der linken Seite des Fahrzeugs 2, wobei das linke Vorderrad RVAL und die Räder RHAL1 und RHAL2 der Hinterachse HA ihre jeweilige Längsrichtung AVAL, AHAL1 bzw. AHAL2 gemäß der Darstellung von Fig. 2 aufweisen. Die Längsrichtung AZAL an der Zusatzachse ZA ist jedoch jeweils gegenüber der Darstellung gemäß Fig. 2 verändert, um einen möglichst geringen Schräglaufwinkel αZAL an der Zusatzachse ZA zu erreichen und somit vorteilhaft Bremskraft auf die Straße bringen zu können bzw. um eine größere Bremswirkung gegenüber der Bremswirkung bei dem ohne die Erfindung größeren Schräglaufwinkel α zu erreichen.

Fig. 7 zeigt eine Situation bei starkem Untersteuern des Fahrzeugs 2. Insbesondere ist ein Drehpunkt D" gegenüber dem Drehpunkt D' gemäß Fig. 2 soweit verschoben, dass die Strecken S zwischen den Radaufstandspunkten C und dem Drehpunkt D" verlängert sind und sich somit ein vergrößerter Bahnradius 5 des Fahrzeugs 2 einstellt. Die Zusatzachse ZA ist gegenüber der Darstellung gemäß Fig. 2 stärker eingelenkt, so dass die Bewegungsrichtung BZA im Wesentlichen mit der Längsrichtung AZA übereinstimmt.

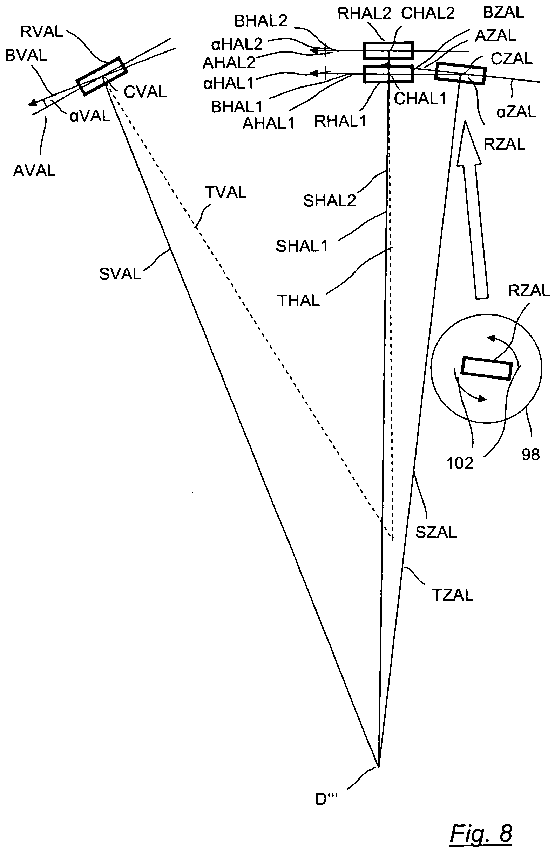

Fig. 8 zeigt ein weiteres Beispiel für ein Untersteuern des Fahrzeugs 2, wobei jedoch eine Drehachse D'" gegenüber der Drehachse D" von Fig. 7 derart verschoben ist, dass in diesem Fall eine Verkleinerung des Lenkeinschlags an der Zusatzachse ZA bzw. eine Drehung des Rades RZAL im gegenüber Fig. 7 entgegengesetzten Drehsinn zur Reduzierung des Schräglaufwinkels αZAL führt.

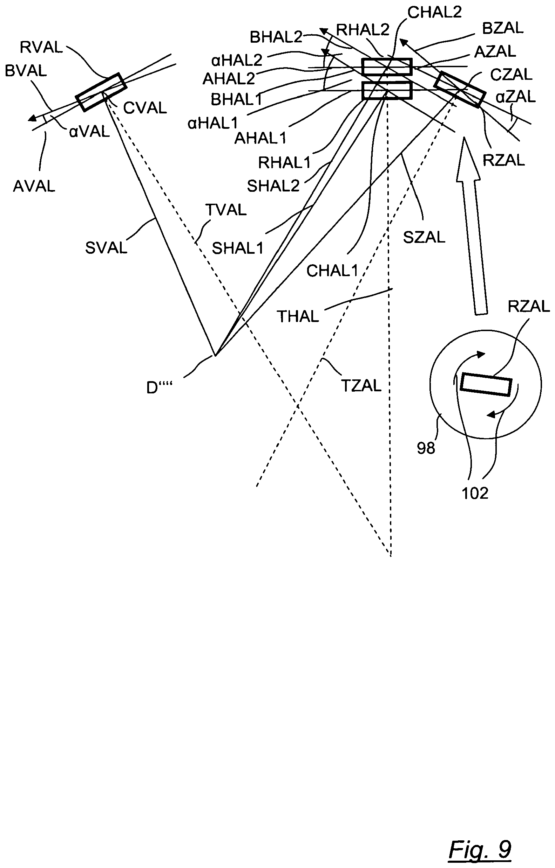

Fig. 9 zeigt beispielhaft die Situation bei starkem Übersteuern des Fahrzeugs 2, wobei ein Drehpunkt D"" gegenüber der Darstellung gemäß Fig. 2 viel näher am Fahrzeug 2 liegt. Gegenüber der Darstellung von Fig. 2 ist dabei die Zusatzachse ZA weiter eingeschlagen bzw. der Lenkwinkel βZA vergrößert, um den Schräglaufwinkel αZA zu verringern. Jedoch kann der Schräglaufwinkel αZA in diesem Fall nicht auf 0 zurückgeführt werden, da das Zusatzachsenrad RZAL hierzu noch weiter als in Fig. 9 dargestellt eingeschlagen werden müsste, jedoch seinen maximalen Einschlag bereits erreicht hat. Durch Bremsen an der Zusatzachse ZA kann dennoch vorteilhaft einem weiteren Ausbrechen des Fahrzeugshecks entgegengewirkt bzw. das Fahrzeug 2 auf seine vorgesehene Spur zurückgeführt werden.

### Bezugszeichenliste

- R: Rad
- RVAL: linkes Vorderachsenrad
- RVAR: rechtes Vorderachsenrad
- VA: Vorderachse
- RHAL1: linkes Hinterachsenrad
- RHAL2: weiteres linkes Hinterachsenrad
- RHAR1: rechtes Hinterachsenrad
- RHAR2: weiteres rechtes Hinterachsenrad
- HA: Hinterachse
- RZAL: linkes Zusatzachsenrad
- RZAR: rechtes Zusatzachsenrad
- ZA: Zusatzachse
- C: Radaufstandspunkt
- CVAL (usw.): Radaufstandspunkt des linken Vorderrades
- D, D'. D", D'", D'": Drehpunkt
- M: Fahrzeugsschwerpunkt
- S: Strecke zwischen Radaufstandspunkt und Drehpunkt
- SVAL (usw.): Strecke zwischen linkem Vorderachsenrad und Drehpunkt
- B: Bewegungsrichtung
- BVAL (usw.): Bewegungsrichtung des linken Vorderachsenrades
- T: Verlängerung der Drehachse eines Rades
- TVAL (usw.): Verlängerung der Drehachse des linken Vorderrades
- Z: Zentrum
- A: Längsrichtung
- AVAL (usw.): Längsrichtung des linken Vorderachsenrades
- α: Schräglaufwinkel
- αVAL (usw.): Schräglaufwinkel des linken Vorderachsenrades
- β: Lenkwinkel
- βVAL (usw.): Lenkwinkel des linken Vorderachsenrades
- K: Kreisbogen
- GKipp: Kippgrenzwert
- Gunter: Untersteuergrenzwert
- Güber: Übersteuergrenzwert
- 1: Fahrstabilisierungseinrichtung
- 2: Fahrzeug
- 3: Lenkrad
- 4: Fahrzeuglängsachse
- 5: Bahnradius
- 6: Kippstabilitätskontrolleinrichtung/RSC
- 7: Gierregelungskontrolleinrichtung
- 8: Steuereinrichtung
- 10: Spurabweichungserkennungsmittel/Spurabweichungsprädiktionsmittel
- 12: Spurhaltemittel
- 14: Bremsaktivierungsmittel
- 16: Schätzmittel
- 18: Schräglaufwinkelverringerungsmittel
- 20: Fahrtrichtungsabweichungserkennungsmittel
- 21: Bremsansteuerungsblock
- 22: Bremseingriffsmittel
- 23: Bremsen des Fahrzeugs
- 23a: Sensor
- 24: erstes Fahrstabilisierungsverfahren
- 24': zweites Fahrstabilisierungsverfahren
- 26: Start des ersten Fahrstabilisierungsverfahrens
- 27: Vorgabe des Bahnradius
- 28: Abfrage: Kippstabilitätskontrolleinrichtung aktiv?
- 30: Ende des ersten Fahrstabilisierungsverfahrens
- 32: Sensieren von Daten, die den Fahrzeugzustand bzw. Fahrzustand des Fahrzeuges charakterisieren
- 34: Kippstabilitätseinrichtung ermittelt Kippneigung
- 36: Abfrage: Kippneigung übersteigt Grenzwert?
- 38: Veranlassen einer Fahrzeugverzögerung
- 40: Ändern des Lenkwinkels an der Vorderachse
- 42: Ändern des Lenkwinkels an der Zusatzachse
- 44: Aktivieren der Radbremsen
- 46: Gaswegnehmen
- 48: Einstellen eines veränderten Lenkwinkels an der Vorderachse
- 50: Einstellen eines veränderten Lenkwinkels an der Zusatzachse
- 52: Untersteuernd oder übersteuernd auf das Fahrzeug wirkender Einfluss
- 54: Entgegenwirken gegen Untersteuern bzw. Übersteuern
- 56: Stabilisieren des Fahrzeugs
- 60: Bahnradius bleibt erhalten
- 62: Start des zweiten Fahrstabilisierungsverfahrens
- 64: Abfrage: Fahrstabilisierungseinrichtung aktiv?
- 66: Ende des zweiten Fahrstabilisierungsverfahrens
- 68: Schätzen der Bewegungsrichtung
- 70: Schätzen des Schräglaufwinkels
- 72: Abfrage: Untersteuert Fahrzeug?
- 74: Abfrage: Übersteuert Fahrzeug?
- 76: Abfrage: Starkes Untersteuern?
- 78: Abfrage: Starkes Übersteuern?
- 80: Einstellen eines vergrößerten Lenkeinschlags
- 82: Einstellen eines verringerten Lenkeinschlags
- 84: Lenkwinkel der Zusatzachse ändern
- 86: Lenkwinkel gemäß Bewegungsrichtung einstellen
- 88: Schräglaufwinkel wird verringert
- 90: Bremseingriff aktivieren
- 92: Fahrzeug wird stabilisiert
- 94: Bremseingriff deaktivieren
- 96: Kreis
- 98: Kreis
- 100: Pfeile
- 102: Pfeile

## Patentansprüche

1. Fahrstabilisierungsverfahren, bei dem zum Stabilisieren (56, 92) eines Fahrzeugs (2), insbesondere Nutzfahrzeugs, ein Lenkwinkel (βVA) wenigstens einer gelenkten Vorderachse (VA) und/oder ein Lenkwinkel (βZA) wenigstens einer gelenkten Zusatzachse (ZA) des Fahrzeugs (2) relativ zur Fahrzeuglängsachse (4) durch automatisch erzwungenes Lenken dieser Achse (VA, ZA) geändert wird (40, 42, 84),
**dadurch gekennzeichnet, dass**
die Bewegungsrichtung (BZA) im Radaufstandspunkt (CZA) eines an der gelenkten Zusatzachse (ZA) angeordneten Zusatzachsenrades (RZA) relativ zur Fahrzeuglängsachse (4) ermittelt wird (68) und der Lenkwinkel (βZA) der gelenkten Zusatzachse (ZA) in Abhängigkeit von dieser jeweils ermittelten Bewegungsrichtung (BZA) eingestellt wird (86), um den Schräglaufwinkel (αZA) des Zusatzachsenrades (RZA) relativ zu seiner Bewegungsrichtung (BZA) zu verringern.

2. Fahrstabilisierungsverfahren nach Anspruch 1,
**dadurch gekennzeichnet, dass**
in Erwiderung auf eine mittels einer Kippstabilitätskontrolleinrichtung (6) als über einem Kippgrenzwert (GKipp) befindlich erkannte Kippneigung des Fahrzeugs (2) zusätzlich zum Veranlassen einer Fahrzeugverzögerung (38) zum Verringern dieser Kippneigung ein Einstellen (48, 50) eines veränderten, insbesondere vergrößerten oder verkleinerten, Lenkwinkels (βVA, βZA) der gelenkten Vorderachse (VA) und/oder Zusatzachse (ZA) veranlasst wird, um einem untersteuernd oder übersteuernd auf das Fahrzeug (2) wirkenden Einfluss (52) dieser Fahrzeugverzögerung (38) entgegenzuwirken (54).

3. Fahrstabilisierungsverfahren nach Anspruch 2, **dadurch gekennzeichnet, dass** der Bahnradius (5) mit dem sich das Fahrzeug (2) um einen Drehpunkt (D, D', D", D'") bewegt, auch im Falle einer von der Kippstabilitätskontrolleinrichtung (6) veranlassten Fahrzeugverzögerung (38) und Veränderung (48, 50) des Lenkwinkels (β) im Wesentlichen einer Vorgabe (27) über ein Lenkrad (3) des Fahrzeugs (2) entspricht.

4. Fahrstabilisierungsverfahren nach Anspruch 2 oder 3, **dadurch gekennzeichnet, dass**
zum Veranlassen der Fahrzeugverzögerung (38) wenigstens eine Bremse (23), insbesondere Radbremse, des Fahrzeugs (2) aktiviert wird (44).

5. Fahrstabilisierungsverfahren nach einem der vorherigen Ansprüche, **dadurch gekennzeichnet, dass**
ein über einem festgelegten Untersteuergrenzwert (Gunter) liegendes und nachfolgend starkes Untersteuern (76) genanntes Untersteuern (72) oder ein über einem Übersteuergrenzwert (Güber) liegendes und nachfolgend starkes Übersteuern (78) genanntes Übersteuern (74) des Fahrzeugs (2) erkannt wird und im Falle eines erkannten starken Untersteuerns (76) oder starken Übersteuerns (78) zusätzlich wenigstens ein Bremseingriff (90) am Zusatzachsenrad (RZA) der gelenkten Zusatzachse (ZA) aktiviert wird.

6. Fahrstabilisierungsverfahren nach Anspruch 5, **dadurch gekennzeichnet, dass** nur im Falle des erkannten starken Untersteuerns (76) oder starken Übersteuerns (78) der Lenkwinkel (βZA) der gelenkten Zusatzachse (ZA) in Abhängigkeit von der jeweils ermittelten Bewegungsrichtung (BZA) eingestellt wird, um den Schräglaufwinkel (αZA) der Zusatzachse (ZA) zu verringern (88).

7. Fahrstabilisierungseinrichtung zum Stabilisieren (56, 92) eines Fahrzeugs (2), insbesondere Nutzfahrzeugs, durch Ändern (40, 42, 84) eines Lenkwinkels (βVA) wenigstens einer gelenkten Vorderachse (VA) und/oder eines Lenkwinkels (βZA) wenigstens einer gelenkten Zusatzachse (ZA) des Fahrzeugs (2) relativ zur Fahrzeuglängsachse (4) durch automatisch erzwungenes Lenken dieser Achse (VA, ZA),
**gekennzeichnet durch**
Schätzmittel (16) zum Ermitteln (68) der Bewegungsrichtung (βZA) im Radaufstandspunkt (CZA) eines an der gelenkten Zusatzachse (ZA) angeordneten Zusatzachsenrades (RZA) relativ zur Fahrzeuglängsachse (4) und Schräglaufwinkelverringerungsmittel (18) zum Einstellen (86) des Lenkwinkels (βZA) der gelenkten Zusatzachse (ZA) in Abhängigkeit von dieser jeweils ermittelten Bewegungsrichtung (BZA), um den Schräglaufwinkel (αZA) des Zusatzachsenrades (RZA) relativ zu seiner Bewegungsrichtung (BZA) zu verringern (88).

8. Fahrstabilisierungseinrichtung nach Anspruch 7, **gekennzeichnet durch** Spurhaltemittel (12) zum zusätzlichen Veranlassen eines Einstellens (48, 50) eines veränderten, insbesondere vergrößerten oder verkleinerten, Lenkwinkels (βVA, βZA) der gelenkten Vorderachse (VA) und/oder Zusatzachse (ZA), um einem untersteuernd oder übersteuernd auf das Fahrzeug (2) wirkenden Einfluss (52) einer Fahrzeugverzögerung (38), die zum Verringern einer mittels einer Kippstabilitätskontrolleinrichtung (6) als über einem Kippgrenzwert (GKipp) befindlich erkannten Kippneigung des Fahrzeugs (2) veranlasst wird, entgegenzuwirken (54).

9. Fahrstabilisierungseinrichtung nach Anspruch 7, **gekennzeichnet durch** eine Ausbildung der Spurhaltemittel (12) derart, dass der Bahnradius (5) mit dem sich das Fahrzeug (2) um einen Drehpunkt (D, D', D", D"') bewegt, auch im Falle einer von der Kippstabilitätskontrolleinrichtung (6) veranlassten Fahrzeugverzögerung (38) und Veränderung (48, 50) des Lenkwinkels (β) im Wesentlichen einer Vorgabe (27) über ein Lenkrad (3) des Fahrzeugs (2) entspricht.

10. Fahrstabilisierungseinrichtung nach Anspruch 8 oder 9 **gekennzeichnet durch** Bremsaktivierungsmittel (14) zum Aktivieren (44) wenigstens einer Bremse (23), insbesondere Radbremse, des Fahrzeugs (2) zum Veranlassen der Fahrzeugverzögerung (38).

11. Fahrstabilisierungseinrichtung nach einem der Ansprüche 7 bis 10, **gekennzeichnet durch**
- Fahrtrichtungsabweichungserkennungsmittel (20) zum Erkennen eines über einem festgelegten Untersteuergrenzwert (Gunter) befindlichen und nachfolgend starkes Untersteuern (76) genannten Untersteuerns (72) sowie zum Erkennen eines über einem festgelegten Übersteuergrenzwert (Güber) befindlichen und nachfolgenden starkes Übersteuern (78) genannten Übersteuerns (74) und
- Bremseingriffsmittel (22) zum zusätzlichen Aktivieren wenigstens eines Bremseingriffs (90) am Zusatzachsenrad (RZA) der gelenkten Zusatzachse (ZA) im Falle eines erkannten starken Untersteuerns (76) oder starken Übersteuerns (78).

12. Fahrstabilisierungseinrichtung nach Anspruch 11, **gekennzeichnet durch** eine Ausbildung der Schräglaufwinkelverringerungsmittel (18) derart, dass der Lenkwinkel (βZA) der gelenkten Zusatzachse (ZA) nur im Falle des erkannten starken Untersteuerns (76) oder starken Übersteuerns (78) in Abhängigkeit von der jeweils ermittelten Bewegungsrichtung (BZA) eingestellt wird, um den Schräglaufwinkel (αZA) zu verringern (88).

13. Fahrstabilisierungseinrichtung nach einem der Ansprüche 7 bis 12 mit Mitteln zur Durchführung des Fahrstabilisierungsverfahrens (24, 24') nach einem der Ansprüche 1 bis 6.

14. Fahrzeug, insbesondere Kraftfahrzeug, mit wenigstens einer lenkbaren Vorderachse (VA) und/oder wenigstens einer lenkbaren Zusatzachse (ZA), **gekennzeichnet durch**
eine Fahrstabilisierungseinrichtung (1) nach einem der Ansprüche 7 bis 13.

## Claims

1. Drive stabilization method, whereby for stabilizing (56, 92) a vehicle (2), especially a commercial vehicle, a steering angle (βVA) of at least one steered front axle (VA) and/or a steering angle (βZA) of at least one steered additional axle (ZA) of the vehicle (2) is changed (40, 42, 84) relative to the longitudinal axis of the vehicle (4) by automatic forced steering of said axle (VA, ZA),
**characterized in that**
the direction of motion (BZA) at the wheel contact point (CZA) of an additional axle wheel (RZA) disposed on the steered additional axle (ZA) relative to the longitudinal axis of the vehicle (4) is determined (68) and the steering angle (βZA) of the steered additional axle (ZA) is adjusted (86) depending on said respectively determined direction of motion (BZA) in order to reduce the drift angle (αZA) of the additional axle wheel (RZA) relative to its direction of motion (BZA).

2. Drive stabilization method according to Claim 1, **characterized in that** in response to a tilt inclination of the vehicle (2) detected by means of a tilt stability control device (6) as being greater than a tilt limit angle (GKipp), in addition to causing a deceleration of the vehicle (38) to reduce said tilt inclination an adjustment (48, 50) of a changed, especially increased or reduced, steering angle (βVA, βZA) of the steered front axle (VA) and/or additional axle (ZA) is caused in order to counteract (54) an influence (52) of said deceleration of the vehicle (38) on the vehicle (2) causing understeer or oversteer.

3. Drive stabilization method according to Claim 2,
**characterized in that**
the track radius (5) with which the vehicle (2) is moving about a point of rotation (D, D', D", D"'), essentially corresponds to a demand (27) by means of a steering wheel (3) of the vehicle (2) even in the case of a deceleration of the vehicle (38) and a change (48, 50) of the steering angle (β) caused by the tilt stability control device (6) .

4. Drive stabilization method according to Claim 2 or 3,
**characterized in that**
at least one brake (23), especially a wheel brake, of the vehicle (2) is operated (44) in order to cause the deceleration of the vehicle (38).

5. Drive stabilization method according to any one of the preceding claims,
**characterized in that**
a mentioned understeer (72) of the vehicle (2) greater than a specified understeer limit value (Gunter), and consequently a strong understeer (76), or a mentioned oversteer (74) of the vehicle (2) greater than an oversteer limit value (Güber), and consequently a strong oversteer (78), is detected and in the case of a detected strong understeer (76) or strong oversteer (78) at least one braking intervention (90) is additionally activated on the additional axle wheel (RZA) of the steered additional axle (ZA).

6. Drive stabilization method according to Claim 5,
**characterized in that**
only in the case of the detected strong understeer (76) or strong oversteer (78) is the steering angle (βZA) of the steered additional axle (ZA) adjusted depending on the respective determined direction of motion (BZA) in order to reduce (88) the drift angle (αZA) of the additional axle (ZA).

7. Drive stabilization device for stabilizing (56, 92) a vehicle (2), especially a commercial vehicle, by changing (40, 42, 84) a steering angle (βVA) of at least one steered front axle (VA) and/or a steering angle (βZA) of at least one steered additional axle (ZA) of the vehicle (2) relative to the longitudinal axis of the vehicle (4) by automatic forced steering of said axle (VA, ZA),
**characterized by**
estimation means (16) for determining (68) the direction of motion (βZA) at the wheel contact point (CZA) of an additional axle wheel (RZA) disposed on the steered additional axle (ZA) relative to the longitudinal axis of the vehicle (4) and drift angle reduction means (18) for adjusting (86) the steering angle (βZA) of the steered additional axle (ZA) depending on said respective determined direction of motion (BZA) in order to reduce (88) the drift angle (αZA) of the additional axle wheel (RZA) relative to its direction of motion (BZA).

8. Drive stabilization device according to Claim 7, **characterized by** track keeping means (12) for additionally causing an adjustment (48, 50) of a changed, especially increased or reduced, steering angle (βVA, βZA) of the steered front axle (VA) and/or additional axle (ZA) in order to counteract (54) an influence (52) on the vehicle (2) causing understeer or oversteer of a deceleration of the vehicle (38) that is caused to reduce a tilt inclination of the vehicle (2) detected by means of a tilt stability control device (6) as being greater than a tilt limit angle (GKipp).

9. Drive stabilization device according to Claim 7,
**characterized by**
a design of the track keeping means (12) such that the track radius (5) with which the vehicle (2) is moving about a point of rotation (D, D', D", D"'), even in the case of a deceleration of the vehicle (38) and change (48, 50) of the steering angle (β) caused by the tilt stability control device (6), essentially corresponds to a demand (27) by means of a steering wheel (3) of the vehicle (2) .

10. Drive stabilization device according to Claim 8 or 9, **characterized by**
brake operating means (14) for operating (44) at least one brake (23), especially a wheel brake, of the vehicle (2) to cause the deceleration of the vehicle (38).

11. Drive stabilization device according to any one of the Claims 7 to 10, **characterized by**
- direction of travel deviation detecting means (20) for detecting a mentioned understeer (72) above a specified understeer limit value (Gunter), and consequently a strong understeer (76), and for detecting a mentioned oversteer (74) above a specified oversteer limit value (Güber), and consequently a strong oversteer (78), and
- braking intervention means (22) for additionally activating at least one braking intervention (90) on the additional axle wheel (RZA) of the steered additional axle (ZA) in the case of a detected strong understeer (76) or strong oversteer (78).

12. Drive stabilization device according to Claim 11,
**characterized by**
a design of the drift angle reduction means (18) such that the steering angle (βZA) of the steered additional axle (ZA) is only adjusted in the case of the detected strong understeer (76) or strong oversteer (78) depending on the respective determined direction of motion (BZA) in order to reduce (88) the drift angle (αZA).

13. Drive stabilization device according to any one of the Claims 7 to 12 with means for performing Drive stabilization method (24, 24') according to any one of Claims 1 to 6.

14. Vehicle, especially a motor vehicle, with at least one steerable front axle (VA) and/or at least one steerable additional axle (ZA), **characterized by** a drive stabilization device (1) according to any one of Claims 7 to 13.

## Revendications

1. Procédé de stabilisation de conduite dans lequel pour la stabilisation (56, 92) d'un véhicule (2), notamment d'un véhicule utilitaire, un angle de braquage (βVA) d'au moins un essieu avant articulé (VA) et/ou un angle de braquage (βZA) d'au moins un essieu supplémentaire articulé (ZA) du véhicule (2) peut être modifié (40, 42, 84) par rapport à l'axe longitudinal (4) du véhicule par braquage automatiquement forcé de cet essieu (VA, ZA) ;
**caractérisé en ce que** :
la direction de déplacement (BZA) au point de contact de la roue avec le sol (CZA) d'une roue d'essieu supplémentaire (RZA) disposée au niveau de l'essieu supplémentaire articulé (ZA) est déterminée (68) par rapport à l'axe longitudinal (4) du véhicule et que l'angle de braquage (βZA) de l'essieu supplémentaire articulé (ZA) est déterminé (86) en fonction de cette direction de déplacement (BZA) respectivement déterminée pour réduire l'angle de roulement oblique (αZA) de la roue d'essieu supplémentaire (RZA) par rapport à sa direction de déplacement (BZA).

2. Procédé de stabilisation de conduite selon la revendication 1, **caractérisé en ce que** contrairement à une tendance de décrochage du véhicule (2) détectée au moyen d'un dispositif de contrôle de stabilité anti-décrochage (6) comme étant au-dessus d'une valeur limite de décrochage (GKipp), un réglage (48, 50) d'un angle de braquage (βVA, βZA) de l'essieu avant articulé (VA) et/ou de l'essieu supplémentaire (ZA) modifié, notamment augmenté ou diminué, est en outre provoqué pour provoquer un ralentissement de véhicule (38) en vue de réduire cette tendance de décrochage, pour contrer (54) une influence (52) de ce ralentissement de véhicule (38) s'exerçant sur le véhicule (2) en sous-virage ou en survirage.

3. Procédé de stabilisation de conduite selon la revendication 2, **caractérisé en ce que** le rayon de trajectoire (5) selon lequel le véhicule (2) se déplace autour d'un point de rotation (D, D', D", D"') correspond pour l'essentiel à un objectif (27) d'une roue motrice (3) du véhicule (2), et ce également en cas de ralentissement de véhicule (38) provoqué par le dispositif de contrôle de stabilité anti-décrochage (6) et de variation (48, 50) de l'angle de braquage (β).

4. Procédé de stabilisation de conduite selon la revendication 2 ou 3, **caractérisé en ce qu'**au moins un frein (23), notamment un frein de roue, du véhicule (2) est activé (44) pour provoquer le ralentissement de véhicule (38).

5. Procédé de stabilisation de conduite selon l'une quelconque des revendications précédentes, **caractérisé en ce qu'**un sous-virage (72) appelé sous-virage (76) situé au-dessus d'une valeur limite de sous-virage (Gunter) fixe et par la suite appelé fort sous-virage ou un survirage (74) du véhicule (2) appelé survirage (78) situé au-dessus d'une valeur limite de survirage (Güber) et par la suite appelé fort survirage est détecté et que dans le cas d'un fort sous-virage (76) ou d'un fort survirage (78) détectés, au moins une intervention de freinage (90) est en outre activée au niveau de la roue d'essieu supplémentaire (RZA) de l'essieu supplémentaire articulé (ZA).

6. Procédé de stabilisation de conduite selon la revendication 5, **caractérisé en ce que** seulement en cas de fort sous-virage (76) ou de fort survirage (78) détectés de l'angle de braquage (βZA), l'essieu supplémentaire articulé (ZA) est réglé en fonction de la direction de déplacement (BZA) respectivement déterminée pour réduire (88) l'angle de roulement oblique (αZA) de l'essieu supplémentaire (ZA).

7. Dispositif de stabilisation de conduite pour la stabilisation (56, 92) d'un véhicule (2), notamment d'un véhicule utilitaire, par modification (40, 42, 84) d'un angle de braquage (βVA) d'au moins un essieu avant articulé (VA) et/ou d'un angle de braquage (BZA) d'au moins un essieu supplémentaire articulé (ZA) du véhicule (2) par rapport à l'axe longitudinal (4) du véhicule par braquage automatiquement forcé de cet essieu (VA, ZA) ;
**caractérisé par** la présence :
de moyens d'évaluation (16) servant à déterminer (68) la direction de déplacement (BZA) au point de contact de la roue avec le sol (CZA) d'une roue d'essieu supplémentaire (RZA) disposée au niveau de l'essieu supplémentaire articulé (ZA) par rapport à l'axe longitudinal (4) du véhicule et de moyens de réduction d'angle de roulement oblique (18) servant au réglage (86) de l'angle de braquage (BZA) de l'essieu supplémentaire articulé (ZA) en fonction de cette direction de déplacement (BZA) respectivement déterminée de façon à réduire (88) l'angle de roulement oblique (αZA) de la roue d'essieu supplémentaire (RZA) par rapport à sa direction de déplacement (BZA).

8. Dispositif de stabilisation de conduite selon la revendication 7, **caractérisé par** la présence de moyens d'assistance au maintien dans la file (12) pouvant provoquer en sus un réglage (48, 50) d'un angle de braquage (βVA, βZA) modifié, notamment augmenté ou diminué, de l'essieu avant articulé (VA) et/ou de l'essieu supplémentaire (ZA), pour contrer (54) une influence (52) d'un ralentissement de véhicule (38) s'exerçant sur le véhicule (2) en sous-virage ou en survirage provoquée pour réduire une tendance de décrochage du véhicule (2) détectée comme supérieure à une valeur limite de décrochage (GKipp) au moyen d'un dispositif de contrôle de stabilité anti-décrochage (6) .

9. Dispositif de stabilisation de conduite selon la revendication 7, **caractérisé par** une formation de moyens d'assistance au maintien dans la file (12) de telle sorte que le rayon de trajectoire (5) se déplace avec le véhicule (2) autour d'un point de rotation (D, D', D", D'''), également en cas d'un ralentissement de véhicule (38) provoqué par le dispositif de contrôle de stabilité anti-décrochage (6) et de modification (48, 50) de l'angle de braquage (β) pour l'essentiel d'un objectif (27) via une roue motrice (3) du véhicule (2).

10. Dispositif de stabilisation de conduite selon la revendication 8 ou 9, **caractérisé par** la présence de moyens d'activation de freinage (14) servant à activer (44) au moins un frein (23), notamment un frein de roue, du véhicule (2) en vue de provoquer le ralentissement de véhicule (38).

11. Dispositif de stabilisation de conduite selon l'une quelconque des revendications 7 à 10, **caractérisé par** la présence :
de moyens de détection de directions de conduite (20) permettant de détecter un sous-virage (72) se trouvant au-dessus d'une valeur limite de sous-virage (Gunter) fixe et appelé par la suite fort sous-virage (76) ainsi que de détecter un survirage (74) se trouvant au-dessus d'une valeur limite de survirage (Güber) fixe et appelé par la suite fort survirage (78) ; et
de moyens d'intervention de freinage (22) servant à activer en outre au moins une intervention de freinage (90) au niveau de la roue d'essieu supplémentaire (RZA) de l'essieu supplémentaire articulé (ZA) en cas de fort sous-virage (76) ou de fort survirage (78) détectés.

12. Dispositif de stabilisation de conduite selon la revendication 11, **caractérisé par** la formation de moyens de réduction d'angle de roulement oblique (18) de telle sorte que l'angle de braquage (βZA) de l'essieu supplémentaire articulé (ZA) ne soit réglé en fonction de la direction de déplacement (BZA) respectivement déterminée qu'en cas de fort sous-virage (76) ou de fort survirage (78) détectés, en vue de réduire (88) l'angle de roulement oblique (αZA).

13. Dispositif de stabilisation de conduite selon l'une quelconque des revendications 7 à 12 à l'aide de moyens de mise en oeuvre du procédé de stabilisation de conduite (24, 24') selon l'une quelconque des revendications 1 à 6.

14. Véhicule, notamment véhicule automobile, équipé d'au moins un essieu avant (VA) moteur et/ou d'au moins un essieu supplémentaire (ZA) moteur, **caractérisé par** un dispositif de stabilisation de conduite (1) selon l'une quelconque des revendications 7 à 13.
